# EUROPÄISCHE PATENTSCHRIFT

(11) **EP 2 986 421 B1**
(45) Veröffentlichungstag und Bekanntmachung des Hinweises auf die Patenterteilung: **28.08.2019**
(21) Anmeldenummer: 14726610.0
(22) Anmeldetag: 27.05.2014
(51) Int. Cl.: B21J 15/02, B21J 15/26, B23P 11/00, B25B 27/00

(54) **NIETGERÄT**
RIVETING DEVICE
APPAREIL DE RIVETAGE

(30) Priorität: 04.06.2013 DE 102013105703
(43) Veröffentlichungstag der Anmeldung: 24.02.2016
(73) Patentinhaber: VVG-Befestigungstechnik GmbH & Co. KG, 24536 Neumünster (DE)
(72) Erfinder: HONSEL, Michael H., 24402 Esgrus (DE)
(74) Vertreter: Braun-Dullaeus Pannen Emmerling Patent- und Rechtsanwaltspartnerschaft mbB
(86) Internationale Anmeldenummer: PCT/EP2014/060955
(87) Internationale Veröffentlichungsnummer: WO 2014/195189

(56) Entgegenhaltungen:
- EP-A1- 2 093 024
- WO-A2-2008/132576

## Beschreibung

Die vorliegende Erfindung betrifft ein Nietgerät und ein Verfahren zum Betrieb eines Nietgerätes zum Setzen vom Blindnietelementen, nämlich Blindnietmuttern und/oder Blindnietschrauben, mit einem Zugdorn, in den eine Drehbewegung zum Einschrauben in das Blindnietelement einleitbar ist und der zum wenigstens teilweise plastischen Verformen des Blindnietelementes durch eine Zugbewegung in das Nietgerät hinein einziehbar ist, wobei ein erster Motor vorgesehen ist, mit dem über eine erste Wirkverbindung mit dem Zugdorn umfassend eine sich in einer Dornachse erstreckende Dornwelle die Drehbewegung in den Zugdorn einleitbar ist.

### STAND DER TECHNIK

Die EP 0 670 199 A1 beschreibt ein Nietgerät zum Setzen von Blindnietelementen mit einem Zugdorn, und um das Blindnietelement auf den Zugdorn aufzuschrauben, kann der Zugdorn in Drehbewegung versetzt werden. Die Drehbewegung wird durch einen Motor in den Zugdorn eingebracht, wobei der Zugdorn solange in Drehbewegung versetzt wird, bis eine Anzahl von Umdrehungen des Zugdorns stattgefunden hat, wobei die Anzahl der Umdrehungen so bemessen ist, dass das Blindnietelement sicher auf den Zugdorn aufgeschraubt werden kann.

Wenn das Blindnietelement das Mundstück vorderseitig am Gehäuse des Nietgerätes erreicht, ist eine Weiterdrehung des Zugdornes nicht mehr möglich, und das Blindnietelement übt ein Gegenmoment auf den Zugdorn aus. Das erzeugte Gegenmoment bewirkt ein Ausrücken einer Kupplung, sodass jede weitere Übertragung einer Drehbewegung auf den Zugdorn unterbrochen ist. Mit dem gleichen Motor wird anschließend eine Einzugbewegung des Zugdorns in das Nietgerät erzeugt, um schließlich die plastische Verformung im Blindnietelement zu erzeugen. Das Einziehen des Zugdorns erfolgt solange, bis ein Antriebsteil einen Endlagenschalter erreicht, wodurch eine Umsteuerung des Motors bewirkt wird, sodass der Zugdorn aus dem plastisch verformten Blindnietelement herausgedreht werden kann.

Das Einleiten der Drehbewegung in den Zugdorn und das anschließende Einziehen des Zugdorns in das Nietgerät mit nur einem einzigen Motor erfordert einen komplexen Getriebeaufbau, da die Umschaltung zwischen der Drehbewegung und der Zugbewegung mechanisch erfolgen muss. Insbesondere die verwendete Rutschkupplung mit einem Einrück- und Ausrückbauteil ist aufwendig ausgestaltet.

Neben der aufwendigen konstruktiven Ausgestaltung des Getriebes im Nietgerät ergeben sich weitere Nachteile in Bezug auf die Kupplung der Gewindespindel, die über das Getriebe nur eine feste Drehzahl zum Auf- und Abschrauben von Blindnietelementen auf den Zugdorn ermöglicht. Dabei wäre es von Vorteil, bei den unterschiedlichen Gewindegrößen von Blindnietelementen auch unterschiedliche Drehzahlen in der Drehbewegung des Zugdorns zu ermöglichen. Beispielsweise kann es vorteilhaft sein, für das Einschrauben des Zugdorns in das Blindnietelement über die ersten wenigen Windungen eine sehr niedrige Drehzahl vorzuwählen und wenn das Gewinde am Zugdorn in das Gewinde im Blindnietelement sicher eingreift, kann die Drehzahl erhöht werden, um ein schnelles Aufschrauben des Blindnietelementes auf den Zugdorn zu ermöglichen. Dies würde zu einem optimierten und verkürzten Arbeitszyklus bei der Bedienung des Nietgerätes führen.

Mit weiterem Nachteil erfordert die Aktivierung der vorgesehenen Rutschkupplung Energie, was bei batteriebetriebenen Nietgeräten von Nachteil ist, da mit einer Batterie betriebene Nietgeräte möglichst viele Blindnietelemente mit nur einer Batterieladung setzen soll. Mit weiterem Nachteil kann nicht die volle Kraft des Motors für das Setzen des Blindnietelementes verwendet werden, da ein Teil dieser Kraft von der Kupplung verbraucht wird. Zudem unterliegt die Kupplung einem Verschleiß, sodass die Kupplung über die Gebrauchsdauer eines Nietgerätes gegebenenfalls mehrfach erneuert werden muss.

Ein weiterer Nachteil entsteht dadurch, dass das Nietgerät hubgesteuert ist, sodass bei jedem Setzvorgang der gleiche Weg zum Einziehen des Zugdorns in das Nietgerät zurückgelegt werden muss. Fertigungstoleranzen bei Blindnietelementen und bei dem zu vernietenden Material können nicht berücksichtigt werden und können beispielsweise bei Aluminium-Blindnietelementen zur Überlastung des Gewindes im Blindnietelement führen. Auch ist es von Nachteil, dass ein Teil der Umdrehungen der Kugelgewindespindel des Getriebes benötigt wird, um das Blindnietelement auf- und abzudrehen. Dadurch muss das Getriebe länger ausgebildet sein und wird insgesamt schwerer, was für handhaltbare Nietgeräte grundsätzlich von Nachteil ist. Außerdem kann das Nietgerät nur Blindnietelemente mit Rechts- oder Linksgewinde setzen. Verarbeitet ein Benutzer unterschiedliche Blindnietelemente mit einem Linksgewinde und mit einem Rechtsgewinde, so benötigt dieser ein weiteres Nietgerät.

Aus der EP 2 093 024 A1 ist ein Nietgerät bekannt, das einen ersten Motor aufweist, mit dem über eine erste Wirkverbindung mit dem Zugdorn umfassend eine sich in einer Dornachse erstreckende Dornwelle die Drehbewegung in den Zugdorn einleitbar ist, um diesen in das Blindnietelement einzuschrauben. Mit einer hydraulischen Einheit ist dann eine Zugbewegung in den Zugdorn einleitbar, wobei zur Erzeugung eines hydraulischen Druckes ein zweiter Motor mit einer Spindel vorgesehen ist, und die Spindel erzeugt eine Hubbewegung in einem Hydraulikkolben. Erst durch den erzeugten Hydraulikdruck kann ein zweiter Kolben bewegt werden, der mit dem Zugdorn mechanisch gekoppelt ist. Zwar kann durch unterschiedliche Kolbenflächen eine große Kraft auf den Zugdorn aufgebracht werden, jedoch sind viele hydraulische Abdichtungen für das Hydraulikfluid erforderlich. Ferner ist der Wirkungsgrad eines hydraulischen Systems eher gering, und die Rückführung des Zugdorns nach Umformung des Blindnietelementes erfordert zusätzlichen mechanischen Aufwand.

### OFFENBARUNG DER ERFINDUNG

Aufgabe der Erfindung ist die Weiterbildung eines Nietgerätes zum Setzen von Blindnietgeräten, mit dem die Nachteile des vorstehend beschriebenen Standes der Technik überwunden werden. Insbesondere ergibt sich die Aufgabe, ein Nietgerät vorzuschlagen, das einen einfacheren mechanischen Aufbau aufweist und eine Drehbewegung des Zugdorns unabhängig von einer Zugbewegung des Zugdorns zu steuern und an verschiedene Blindnietelemente anzupassen.

Diese Aufgabe wird ausgehend von einem Nietgerät zum Setzen von Blindnietelementen gemäß dem Oberbegriff des Anspruchs 1 und ausgehend von einem Verfahren zum Betrieb eines Nietgerätes zum Setzen von Blindnietelementen gemäß den bekannten Merkmalen des Anspruchs 11 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass ein zweiter Motor vorgesehen ist, mit dem über eine zweite Wirkverbindung mit dem Zugdorn umfassend eine Spindelmutter, die mit einer Hohlspindel zusammenwirkt, wobei die Dornwelle mit der Hohlspindel hubbewegbar ist, die Zugbewegung in den Zugdorn einleitbar ist.

Die Erfindung geht von dem Gedanken aus, ein Nietgerät zum Setzen von Blindnietelementen mit zwei Motoren auszustatten, und ein erster Motor dient nur zur Erzeugung der Drehbewegung und ein zweiter Motor dient nur zur Erzeugung der Zugbewegung in den Zugdorn, welcher unabhängig vom ersten Motor betrieben werden kann. Beide Motoren können unabhängig voneinander ausgeführte Wirkverbindungen zum Zugdorn aufweisen, ohne dass damit vorliegend ausgeschlossen ist, dass beide Wirkverbindungen auch gemeinsame Bauteile umfassen können.

Mit der erfindungsgemäßen Ausführung eines Nietgerätes werden die vorstehend genannten Nachteile gelöst, insbesondere weil der erste Motor unabhängig vom zweiten Motor betrieben werden kann. Die beiden im Wesentlichen unabhängig voneinander ausgeführten Wirkverbindungen zwischen Motor und Zugdorn können zusammengenommen einfacher ausgeführt werden als eine einzige Wirkverbindung zwischen einem einzigen Motor und dem Zugdorn, die aufwendige mechanische Ausführungen wie eine Rutschkupplung und dergleichen benötigt, um zunächst die Drehbewegung und anschließend die Zugbewegung in den Zugdorn einzuleiten. Durch die Verwendung von zwei Motoren entfällt insbesondere die mechanische Kopplung zwischen dem Motor und dem Zugdorn zur Beendigung der Drehbewegung und Einleiten der Zugbewegung, sodass erfindungsgemäß die Betätigung des Zugdorns nicht mehr hubgesteuert ausgeführt werden muss, sondern die Steuerung der Motoren kann beispielsweise kraftgesteuert erfolgen, insbesondere unter Erfassung der Betriebsparameter der Motoren.

Vorteilhafterweise kann der Zugdorn um die Dornachse drehbar beziehungsweise in dieser axial bewegbar sein, wobei der erste Motor derart angeordnet werden kann, dass eine Motorachse des ersten Motors mit der Dornachse zusammenfällt. Der erste Motor kann damit hinter der Dornachse sitzen, und die Dornwelle erstreckt sich in der Dornachse und bildet die Wirkverbindung zwischen dem ersten Motor und dem Zugdorn. Dabei kann der erste Motor eine Getriebeeinheit umfassen oder es kann zwischen dem ersten Motor und der Dornwelle eine separate Getriebeeinheit vorgesehen sein.

Der erste Motor kann eine geringere elektrische Aufnahmeleistung und/oder eine geringere mechanische Abgabeleistung aufweisen als der zweite Motor, und es sind beispielsweise Kleinstmotoren mit integrierter Getriebeeinheit bekannt, die zur Bildung des ersten Motors beispielsweise Verwendung finden können. Schließlich muss lediglich der Zugdorn in Drehbewegung versetzt werden, um das Blindnietelement auf den Zugdorn aufzuschrauben, wofür nur eine geringe Motorleistung erforderlich ist. Um anschließend mit dem zweiten Motor die plastische Verformung im Blindnietelement zu erzeugen, ist eine erheblich größere elektrisch-mechanische Leistung erforderlich, die durch den zweiten Motor bereitgestellt werden kann. Die sich ergebende vereinfachte Getriebetechnik in den Wirkverbindungen zwischen den Motoren und dem Zugdorn im Vergleich zu einem einzigen Motor und dem Zugdorn ermöglicht eine Ausführung des Nietgerätes mit einem erheblich geringeren Gewicht, das trotz Verwendung eines zweiten Motors erreichbar ist.

Mit weiterem Vorteil kann der erste Motor als rechts- oder linksdrehender Motor betrieben werden, beispielsweise durch eine einfache elektrische Umpolung. Bei entsprechender Ausführung des Zugdorns mit einem Rechts- oder Linksgewinde kann auf einfache Weise das Nietgerät zum Setzen von Blindnietelementen benutzt werden, die ein Rechts- oder Linksgewinde aufweisen.

Die Wirkverbindung zwischen dem zweiten Motor und dem Zugdorn umfasst eine Spindelmutter, die mit einer Hohlspindel zusammenwirkt, wobei die Dornwelle mit der Hohlspindel hubbewegbar ist. Dadurch führt die Dornwelle und mit der Dornwelle der Zugdorn jede Axialbewegung aus, die durch die Hohlspindel erzeugt wird, sodass die Hohlspindel, die Dornwelle und damit der Zugdorn im Verbund miteinander bewegt werden können. Insbesondere kann der Zugdorn über die Dornwelle in Axialrichtung starr mit der Hohlspindel verbunden sein, sodass der Zugdorn ohne Zwischenschaltung beispielsweise eines Antriebsteils über die Spindelmutter und die Hohlspindel mit dem zweiten Motor axial hin- und herbewegt werden kann.

Die Dornwelle, die den ersten Motor beziehungsweise die Getriebeeinheit des ersten Motors mit dem Zugdorn verbindet, kann sich mit besonderem Vorteil konzentrisch durch die Hohlspindel hindurch erstrecken und in dieser drehbar gelagert sein. Wird durch die Drehung der Spindelmutter die Hohlspindel axial verlagert, so verlagert sich mit der Hohlspindel auch die Dornwelle mit dem Zugdorn und ferner auch der erste Motor, gegebenenfalls mit der Getriebeeinheit. Zur Lagerung der Dornwelle in der Hohlspindel können beispielsweise Gleitlagerbuchsen vorgesehen sein. Insbesondere kann die Dornwelle auch einteilig mit dem Zugdorn ausgeführt sein oder der Zugdorn wird über einen entsprechenden Verschluss an der Dornachse beispielsweise für eine notwendige Auswechselbarkeit angebracht.

Zum Antrieb der Spindelmutter, die in axialer Richtung unbeweglich im Gehäuse des Nietgerätes aufgenommen sein kann, kann ein Ritzel dienen, das mit einem Zahnkranz außenseitig auf der Spindelmutter kämmt, und das Ritzel kann auf einer Zwischenwelle aufgenommen sein, die über ein weiteres Zahnradpaar mit dem zweiten Motor angetrieben werden kann. Die Spindelmutter mit dem Zahnkranz kann drehbeweglich im Gehäuse des Nietgerätes aufgenommen sein, ferner kann eine Verdrehsicherung und ein entsprechendes Gehäuse für den ersten Motor vorgesehen sein, der auf der hinteren Seite an der Hohlspindel angeordnet ist, und der mit der Drehung der Hohlspindel nicht mitdrehen darf. Das Gehäuse des Motors kann beispielsweise verdrehgesichert mit dem Gehäuse des Nietgerätes verbunden sein.

Gemäß einer weiteren vorteilhaften Ausführungsform des erfindungsgemäßen Nietgerätes kann wenigstens ein Sensormittel vorgesehen sein, durch das zumindest die axiale Position der Hohlspindel beziehungsweise der Dornwelle erfassbar ist. Insbesondere kann eine Steuereinheit vorgesehen sein, durch die der erste Motor und/oder der zweite Motor insbesondere in Wechselwirkung mit den Sensormitteln aktivierbar ist. Der Betrieb der Motoren kann über ein Betätigungselement durch einen Bediener erfolgen, wobei das Betätigungselement beispielsweise ein Regel-Tastschalter ist. Dadurch kann der Bediener durch unterschiedlich tiefes Eindrücken des Betätigungselementes in den Regel-Tastschalter die Drehgeschwindigkeit des ersten und/oder des zweiten Motors steuern, insbesondere um durch Aktivierung des ersten Motors ein Blindnietelement auf den Zugdorn aufzuschrauben. Beispielsweise kann der Bediener auch den zweiten Motor steuern, beispielsweise um aus sonstigen Gründen das Einleiten einer plastischen Verformung in das Blindnietelement zu unterbrechen. Insbesondere kann der Regel-Tastschalter noch einen Umschalter aufweisen, um auch ohne Beendigung der Zugbewegung und der plastischen Verformung des Blindnietelementes den Zugdorn aus dem Blindnietelement wieder herauszuschrauben.

Die Aufgabe der vorliegenden Erfindung wird ferner gelöst durch ein Verfahren zum Betrieb eines Nietgerätes zum Setzen von Blindnietelementen, nämlich Blindnietmuttern und/oder Blindnietschrauben, mit einem Zugdorn, in den eine Drehbewegung zum Einschrauben in das Blindnietelement eingeleitet wird und in den eine Zugbewegung zum wenigstens teilweise plastischen Verformen des Blindnietelementes eingeleitet wird, wobei das Verfahren wenigstens den Schritt der Aktivierung eines ersten Motors aufweist, mit dem über eine erste Wirkverbindung zum Zugdorn umfassend eine sich in der Dornachse erstreckende Dornwelle die Drehbewegung in den Zugdorn eingeleitet wird, um den Zugdorn in das Blindnietelement einzuschrauben, wobei ferner der Schritt der Deaktivierung des ersten Motors folgt, und es folgt der Schritt der Aktivierung eines zweiten Motors, mit dem über eine zweite Wirkverbindung zum Zugdorn umfassend eine Spindelmutter, die mit einer Hohlspindel zusammenwirkt, wobei die Dornwelle mit der Holspindel hubbewegbar ist, die Zugbewegung in den Zugdorn eingeleitet wird, um die wenigstens teilweise plastische Verformung in das Blindnietelement einzubringen. Anschließend kann der zweite Motor umgepolt werden, um den Zugdorn aus dem verformten Blindnietelement wieder herauszuschrauben.

Das Verfahren kann durch eine Steuereinheit zur Steuerung der Motoren geführt werden und durch die Steuereinheit kann der elektrische Strom und/oder die elektrische Spannung zum Betrieb des ersten und/oder des zweiten Motors erfasst werden, wobei das Aktivieren und/oder das Deaktivieren des ersten und/oder des zweiten Motors in Abhängigkeit des erfassten elektrischen Stromes und/oder der elektrischen Spannung durch die Steuereinheit gesteuert wird. Beispielsweise kann ein Grenzstrom definiert werden, der dann erreicht wird, wenn die erforderliche plastische Verformung im Blindnietelement erzeugt wurde. Wird der Grenzstrom durch die Steuereinheit erkannt, so kann der zweite Motor umgepolt werden, um den Zugdorn aus dem fertig gesetzten Blindnietelement wieder herauszuschrauben. Damit kann bereits durch die Erfassung elektrischer Betriebsgrößen der Motoren das Nietgerät bedient werden, ohne dass Lage-Endschalter oder sonstige Mittel zur Positionserfassung in den Wirkverbindungen zwischen den Motoren und dem Zugdorn notwendig sind.

Weiterführend können Schwellwerte für den elektrischen Strom und/oder die elektrische Spannung zum Betrieb des ersten und/oder des zweiten Motors vorgegeben werden, wobei insbesondere in Abhängigkeit verwendeter Blindnietelemente Schwellwerte in der Steuereinheit abgespeichert werden können. Unterschiedliche Blindnietelemente mit unterschiedlichen Größen, die beispielsweise auch aus unterschiedlichen Materialien bestehen können, können unterschiedliche Einzugswege des Zugdorns erforderlich machen, die bereits früher oder später erreicht werden, und die bereits durch den Betriebsstrom und/oder die Betriebsspannung der Motoren erkannt werden können. Insbesondere können Toleranzen der Blindnietelemente, jedoch auch der zu vernietenden Materialien, ausgeglichen werden, da eine Steuerung der Motoren allein über die elektrischen Betriebsparameter erfolgt, ohne dass ein weggebundener Einzugsvorgang des Zugdorns in das Nietgerät vorgesehen ist, der zur Zerstörung des Blindnietelementes oder sogar des Zugdorns führen kann.

Schließlich kann ein Betätigungselement zur manuellen Betätigung durch den Bediener vorgesehen sein, wobei das Betätigungselement wegabhängig betätigt werden kann, sodass über den manuell steuerbaren Weg der Betätigung wenigstens der erste Motor mit veränderbarer Drehzahl aktiviert wird. Beispielsweise kann das Betätigungselement ein Potentiometer umfassen, über das die Drehzahl des ersten, beispielsweise auch des zweiten Motors gesteuert werden kann.

Das Prinzip der Steuerung der Motoren über die elektrischen Betriebsparameter kann darauf beruhen, Schwellwerte zu definieren, die nicht über- oder unterschritten werden sollen. Steigt der Strom beispielsweise über einen bestimmten Schwellwert an, kann das Nietgerät abschalten, um Schaden am Motor und der Steuereinheit abzuwenden. Das Nietgerät fährt dann wieder in eine Ausgangslage zurück und insbesondere das Blindnietelement kann in der Ausgangslage freigegeben werden. Nähert sich bei einem batteriegetriebenen Nietgerät die Batterie ihrer Kapazitätsgrenze und fällt die Spannung ab, so sinkt die Spannung unter einen Schwellwert, wodurch erkannt werden kann, dass die Batterie entleert ist. Auch dann kann das Nietgerät wieder in die Ausgangslage zurückfahren und das Blindnietelement freigeben, und erst nach einem Batteriewechsel kann das Gerät wieder in Betrieb genommen werden, was ebenfalls durch die Steuerung erkannt werden kann.

Neben einem Regel-Tastschalter mit einem Betätigungselement, das wegabhängig eingedrückt werden kann, um beispielsweise Drehzahlen der Motoren zu steuern, kann zum Bedienen des Nietgerätes auch ein am Nietgerät angebrachtes Bedienfeld vorgesehen sein, das über Tasten oder einen Touchscreen gesteuert werden kann. Auch ist es denkbar, eine drahtlose Bluetooth-/ oder WiFi- oder Kabelverbindung mit einem Computer oder Smartphone zu verbinden, mittels der eine geeignete Software oder ein App betrieben werden kann. Weiterhin kann am Nietgerät ein Notschalter angebracht sein.

Die im Nietgerät und insbesondere in der Steuereinheit abspeicherbaren Parameter können verschiedene Merkmale betreffen. Beispielsweise kann die Eingabe der Gewindegröße der Blindnietelemente zur Zuordnung einer maximalen Aufschraubgeschwindigkeit vorgesehen sein, die im Speicher des Nietgerätes oder einer Software auf einem separaten Gerät zugeordnet ist. Auch kann die Eingabe der Aufschraubgeschwindigkeit direkt erfolgen, und der Wert kann für ein bestimmtes Blindnietelement abgespeichert sein. Auf gleiche Weise können Blindnietelemente aus verschiedenen Materialien, verschiedenen Gewindearten oder verschiedenen geometrischen Abmessungen in die Steuerung eingegeben werden. Der Bediener kann dann das zu verarbeitende Blindnietelement in einem Display der Steuereinheit anwählen, und die Steuerung steuert die Motoren derart, dass das aktuell verwendete Blindnietelement mit optimalen Parametern gesetzt werden kann.

### BEVORZUGTES AUSFÜHRUNGSBEISPIEL DER ERFINDUNG

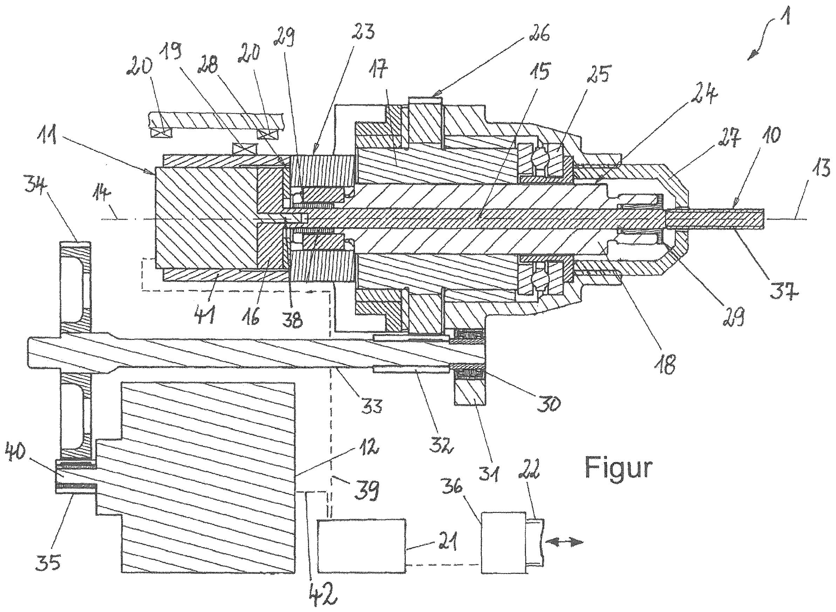

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Es zeigt:
- die Figur: eine Querschnittsansicht durch ein Nietgerät mit den Merkmalen der vorliegenden Erfindung.

Die Figur zeigt eine Querschnittsansicht eines Nietgerätes 1 mit den Merkmalen der vorliegenden Erfindung. Das Nietgerät 1 weist als Grundstruktur ein Gehäuse 31 auf, das lediglich teilweise gezeigt ist. Das Nietgerät 1 dient zum Setzen von Blindnietelementen, die auf einem Zugdorn 10 aufgenommen werden können, und die Blindnietelemente können beispielsweise zur Verbindung von Bauteilen verwendet werden. Der Zugdorn 10 ist mit einem Gewinde 37 ausgeführt, das in eine Gewindebohrung im Blindnietelement eingeschraubt werden kann. Der Zugdorn 10 ist endseitig an einer Dornwelle 15 aufgenommen, wobei die Verbindung oder der Übergang des Zugdorns 10 in die Dornwelle 15 lediglich vereinfacht schematisch dargestellt ist, und der Zugdorn 10 und die Dornwelle 15 können einteilig sein oder der Zugdorn 10 ist über eine entsprechende Verbindung endseitig an der Dornwelle 15 aufgenommen.

Die Dornwelle 15 erstreckt sich konzentrisch um eine Dornachse 13, in der sich auch der Zugdorn 10 erstreckt. Auf der dem Zugdorn 10 abgewandten Seite der Dornwelle 15 schließt sich ein erster Motor 11 an, der zum Drehantrieb der Dornwelle 15 und damit des Zugdorns 10 um die Dornachse 13 dient. Der erste Motor 11 erstreckt sich in einer Motorachse 14, die mit der Dornachse 13 zusammenfällt. An dem ersten Motor 11 schließt sich eine Getriebeeinheit 16 an, durch die eine Untersetzung der Drehgeschwindigkeit einer Motorwelle 38 des ersten Motors 11 auf die Drehgeschwindigkeit der Dornwelle 15 erreicht werden kann.

Wird der erste Motor 11 in Betrieb genommen, so kann über die Getriebeeinheit 16 die Dornwelle 15 und damit der Zugdorn 10 in Drehbewegung versetzt werden, um ein Blindnietelement auf das Gewinde 37 des Zugdorns 10 aufzuschrauben. Beispielsweise kann das Aufschrauben des Blindnietelementes auf das Gewinde 37 solange erfolgen, bis das Blindnietelement an die äußere Stirnseite eines Mundstückes 27 anstößt, das an der Vorderseite des Nietgerätes 1 im Gehäuse 31 eingesetzt ist.

Das Nietgerät 1 verfügt über eine Steuereinheit 21, über die mit einer Steuerleitung 39 der erste Motor 11 gesteuert werden kann. Stößt das Blindnietelement an der Außenseite des Mundstückes 27 an, so blockiert die weitere Drehung des Zugdorns 10 und damit die Drehung der Dornwelle 15, wodurch der Aufnahmestrom des ersten Motors 11 steil ansteigt. Der Anstieg des Aufnahmestroms kann durch die Steuereinheit 21 erfasst werden, sodass der erste Motor 11 trotz Betätigung eines Betätigungselementes 22 eines Regel-Tastschalters 36 durch einen Bediener abgeschaltet wird. Dadurch wird ein Überlasten des ersten Motors 11 verhindert.

Das Nietgerät 1 weist einen zweiten Motor 12 auf, der in Bezug auf die elektrische Aufnahmeleistung und die mechanische Abgabeleistung stärker ausgeführt ist als der erste Motor 11. Auf der Motorwelle 40 des zweiten Motors 12 ist ein Ritzel 35 aufgenommen, das ein Zahnrad 34 antreibt, welches auf einer Zwischenwelle 33 drehfest aufgenommen ist. Die Getriebestufe mit dem Ritzel 35 und Zahnrad 34 dient zur Untersetzung, sodass die Zwischenwelle 33 eine kleinere Drehzahl aufweist als die Motorwelle 40.

Die Zwischenwelle 33 ist drehbar im Gehäuse 31 des Nietgerätes 1 gelagert, wofür beispielhaft ein Lager 30 dargestellt ist. Angrenzend an das Lager 30 ist auf der Zwischenwelle 33 ein weiteres Ritzel 32 drehfest aufgebracht, das mit einem Zahnkranz 26 kämmt, und durch Drehung des Ritzels 32 kann eine Spindelmutter 17 in Drehung versetzt werden, auf der der Zahnkranz 26 aufgebracht ist. Durch die Spindelmutter 17 erstreckt sich eine Hohlspindel 18 hindurch, wobei die Verbindung der Spindelmutter 17 mit der Hohlspindel 18 in nicht näher gezeigter Weise über ein Spindelgewinde umfasst, in das die Spindelmutter 17 eingreift.

Durch die Drehung der Spindelmutter 17 wird folglich eine Axialbewegung der Hohlspindel 18 erzeugt, sodass diese entlang der Dornachse 13 verfahren kann, wenn die Spindelmutter 17 durch Betrieb des zweiten Motors 12 um die Dornachse 13 gedreht wird.

Die Dornwelle 15 ist mit Gleitlagern 29 in der Hohlspindel 18 drehbeweglich gelagert, und um in axialer Richtung die Dornwelle 15 in der Hohlspindel 18 unbeweglich aufzunehmen, ist ein Axiallager 28 vorgesehen, das zwischen dem ersten Motor 11 beziehungsweise zwischen der Getriebeeinheit 16 und einer Verdrehsicherung 23 angeordnet ist, wobei die Verdrehsicherung 23 ein Mitdrehen des Motorgehäuses 41 verhindert, in dem der erste Motor 11 aufgenommen ist.

Wird die Hohlspindel 18 durch den Betrieb des zweiten Motors 12 entlang der Dornachse 13 verfahren, beispielsweise derart, dass der Zugdorn 10 in das Mundstück 27 des Gehäuses 31 eingezogen wird, so verfährt die gesamte Einheit aus dem ersten Motor 11 und der Getriebeeinheit 16 mit der Dornwelle 15 in Richtung zur Motorachse 14. Ist auf dem Zugdorn 10 ein Blindnietelement aufgeschraubt, so erfolgt eine plastische Verformung im Blindnietelement, indem in den Zugdorn 10 über die Dornwelle 15 eine Zugkraft eingeleitet wird. Die Zugkraft wird zwischen der Spindelmutter 17 und der Hohlspindel 18 erzeugt, und die Zugkraft zwischen der Dornwelle 15 und der Hohlspindel 18 wird über das Axiallager 28 abgestützt. Weiterhin befindet sich zwischen dem Gehäuse 31 des Nietgerätes 1 und der Spindelmutter 17 ein Axiallager 25, sodass die Zugkraft, die von der Hohlspindel 18 auf die Spindelmutter 17 wirkt, über das Axiallager 25 gegen das Gehäuse 31 abgestützt werden kann.

Der zweite Motor 12 wird über eine weitere Steuerleitung 42 mit der Steuereinheit 21 gesteuert, und hat die plastische Verformung im Blindnietelement einen Vorformungsgrad erreicht, der zu einem starken Kraftanstieg der Zugkraft im Zugdorn 10 beziehungsweise in der Dornwelle 15 führt, so steigt auch der Aufnahmestrom des zweiten Motors 12 an, der durch die Steuereinheit 21 sensiert wird. Erreicht der Aufnahmestrom des zweiten Motors 12 einen Grenzwert, so schaltet auch bei weiterer Betätigung des Betätigungselementes 22 durch einen Bediener die Steuereinheit 21 den zweiten Motor 12 ab oder polt diesen um, um nach Beendigung des Setzvorgangs des Blindnietelementes den Zugdorn 10 aus diesem wieder herauszuschrauben.

Zum Lösen des Zugdorns 10 aus dem Blindnietelement ist zunächst erforderlich, dass der zweite Motor 12 durch leichtes Rückdrehen die Verspannung zwischen dem Blindnietelement gegen das Mundstück 27 löst, um anschließend den ersten Motor 12 wieder abzuschalten. Erst anschließend kann der erste Motor 11 in Gegendrehrichtung in Betrieb genommen werden, um den Zugdorn 10 aus dem Blindnietelement herauszuschrauben.

Die axiale Verlagerung der Hohlspindel 18 mit der Dornwelle 15 entlang der Dornachse 13 und die axiale Verlagerung des ersten Motors 11 entlang der Motorachse 14 kann über entsprechende Sensormittel 19 und 20 erfasst werden. Das Sensormittel 19 kann beispielsweise ein Signalgeber sein, und das Sensormittel 20 kann ein Signalaufnehmer umfassen. Beispielsweise kann ein Signalgeber 19 zwischen zwei Signalaufnehmern 20 hin- und herfahren, indem der Signalgeber 19 am Motorgehäuse 41 des ersten Motors 11 angeordnet ist, der gemeinsam mit der Hohlspindel 18 die Axialbewegung entlang der Dornachse 13 ausführt. Über die Sensormittel 19 und 20 kann durch die Steuereinheit 21 die Axialposition des Zugdorns 10 erfasst werden, beispielsweise um beim Einschalten des Nietgerätes 1 eine Referenzfahrt zu ermöglichen oder beispielsweise um bei nicht ordnungsgemäß ausgeführten Setzvorgängen von Blindnietelementen das Nietgerät 1 wieder in eine Ausgangslage zu fahren. Beispielsweise können die Sensormittel 19 und 20 HALL- Sensoren umfassen.

Der Regel-Tastschalter 36 stellt lediglich beispielhaft ein Betätigungselement 22 dar, das in einer gezeigten Pfeilrichtung in den Regel-Tastschalter 36 eingedrückt werden kann. Beispielsweise kann der Regel-Tastschalter 36 ein Potentiometer oder ein ähnlich wirkendes elektronisches Bauteil aufweisen, mit dem die Eindrücktiefe des Betätigungselementes 22 durch den Bediener erfasst werden kann. Dadurch kann beispielsweise die Drehzahl des ersten Motors 11 und/oder des zweiten Motors 12 gesteuert werden, wobei das Betätigungselement 22 auch zweistufig ausgeführt sein kann, um in einer ersten Eindrücktiefe des Betätigungselementes 22 den ersten Motor 11 zu betätigen, und nach Überwinden einer Druckschwelle kann das Betätigungselement 22 tiefer in den Regel-Tastschalter 36 eingedrückt werden, um den zweiten Motor 12 zu aktivieren. Damit ergibt sich ein einfaches, intuitiv bedienbares Nietgerät 1 zum Aufnehmen von Blindnietelementen auf einem Zugdorn 10 und zum anschließenden Setzen des Blindnietelementes.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Nietgerät
- 10: Zugdorn
- 11: erster Motor
- 12: zweiter Motor
- 13: Dornachse
- 14: Motorachse
- 15: Dornwelle
- 16: Getriebeeinheit
- 17: Spindelmutter
- 18: Hohlspindel
- 19: Sensormittel Signalgeber
- 20: Sensormittel, Signalaufnehmer
- 21: Steuereinheit
- 22: Betätigungselement
- 23: Verdrehsicherung
- 24: Spindelgewinde
- 25: Axiallager
- 26: Zahnkranz
- 27: Mundstück
- 28: Axiallager
- 29: Gleitlager
- 30: Lager
- 31: Gehäuse
- 32: Ritzel
- 33: Zwischenwelle
- 34: Zahnrad
- 35: Ritzel
- 36: Regel-Tastschalter
- 37: Gewinde
- 38: Motorwelle
- 39: Steuerleitung
- 40: Motorwelle
- 41: Motorgehäuse
- 42: Steuerleitung

## Patentansprüche

1. Nietgerät (1) zum Setzen von Blindnietelementen, nämlich Blindnietmuttern und/oder Blindnietschrauben, mit einem Zugdorn (10), in den eine Drehbewegung zum Einschrauben in das Blindnietelement einleitbar ist und der zum wenigstens teilweise plastischen Verformen des Blindnietelementes durch eine Zugbewegung in das Nietgerät (1) hinein einziehbar ist, wobei ein erster Motor (11) vorgesehen ist, mit dem über eine erste Wirkverbindung mit dem Zugdorn (10) umfassend eine sich in einer Dornachse (13) erstreckende Dornwelle (15) die Drehbewegung in den Zugdorn (10) einleitbar ist,
**dadurch gekennzeichnet, dass** ein zweiter Motor (12) vorgesehen ist, mit dem über eine zweite Wirkverbindung mit dem Zugdorn (10) umfassend eine Spindelmutter (17), die mit einer Hohlspindel (18) zusammenwirkt, wobei die Dornwelle (15) mit der Hohlspindel (18) hubbewegbar ist, die Zugbewegung in den Zugdorn (10) einleitbar ist.

2. Nietgerät (1) nach Anspruch 1, **dadurch gekennzeichnet, dass** der Zugdorn (10) um die Dornachse (13) drehbar bzw. in dieser axial bewegbar ist, wobei der erste Motor (11) derart angeordnet ist, dass eine Motorachse (14) des ersten Motors (11) mit der Dornachse (13) zusammenfällt.

3. Nietgerät (1) nach Anspruch 1 oder 2, **dadurch gekennzeichnet, dass** der erste Motor (11) eine Getriebeeinheit (16) umfasst, an der die Dornwelle (15) angeordnet ist.

4. Nietgerät (1) nach einem der Ansprüche 1 bis 3, **dadurch gekennzeichnet, dass** der erste Motor (11) eine kleinere elektrische Aufnahmeleistung und/oder mechanische Abgabeleistung aufweist als der zweite Motor (12).

5. Nietgerät (1) nach einem der vorgenannten Ansprüche, **dadurch gekennzeichnet, dass** die Dornwelle (15) konzentrisch zur Hohlspindel (18) durch diese hindurchgeführt ist.

6. Nietgerät (1) nach einem der vorgenannten Ansprüche, **dadurch gekennzeichnet, dass** die Dornwelle (15) in der Hohlspindel (18) drehbar gelagert ist.

7. Nietgerät (1) nach einem der vorgenannten Ansprüche, **dadurch gekennzeichnet, dass** der erste Motor (11) und insbesondere die Getriebeeinheit (16) mit der Bewegung der Hohlspindel (18) bzw. der Dornwelle (15) mitbewegbar ist.

8. Nietgerät (1) nach einem der vorgenannten Ansprüche, **dadurch gekennzeichnet, dass** wenigstens ein Sensormittel (19, 20) vorgesehen ist, durch das zumindest die axiale Position der Hohlspindel (18) bzw. der Dornwelle (15) erfassbar ist, und/oder wobei eine Steuereinheit (21) vorgesehen ist, durch die der erste (11) und/oder der zweite Motor (12) insbesondere in Wechselwirkung mit den Sensormitteln (19, 20) aktivierbar ist.

9. Verfahren zum Betrieb eines Nietgerätes (1) zum Setzen von Blindnietelementen, nämlich Blindnietmuttern und/oder Blindnietschrauben, mit einem Zugdorn (10), in den eine Drehbewegung zum Einschrauben in das Blindnietelement eingeleitet wird und in den eine Zugbewegung zum wenigstens teilweise plastischen Verformen des Blindnietelementes eingeleitet wird, wobei das Verfahren wenigstens die folgenden Schritte aufweist:
- Aktivieren eins ersten Motors (11), mit dem über eine erste Wirkverbindung zum Zugdorn (10) umfassend eine sich in einer Dornachse (13) erstreckende Dornwelle (15) die Drehbewegung in den Zugdorn (10) eingeleitet wird, um den Zugdorn (10) in das Blindnietelement einzuschrauben,
- Deaktivieren des ersten Motors (11),
- Aktivieren eins zweiten Motors (12), mit dem über eine zweite Wirkverbindung zum Zugdorn (10) umfassend eine Spindelmutter (17), die mit einer Hohlspindel (18) zusammenwirkt, wobei die Dornwelle (15) mit der Hohlspindel (18) hubbewegbar ist, die Zugbewegung in den Zugdorn (10) eingeleitet wird, um die wenigstens teilweise plastische Verformung in das Blindnietelement einzubringen.

10. Verfahren nach Anspruch 9 **dadurch gekennzeichnet, dass** durch die Steuereinheit (21) der elektrische Strom und/oder die elektrische Spannung zum Betrieb des ersten (11) und/oder des zweiten Motors (12) erfasst wird, wobei das Aktivieren und/oder das Deaktivieren des ersten (11) und/oder des zweiten Motors (12) in Abhängigkeit des erfassten elektrischen Stromes und/oder der elektrischen Spannung durch die Steuereinheit (21) gesteuert wird.

11. Verfahren nach Anspruch 10 **dadurch gekennzeichnet, dass** Schwellwerte für den elektrischen Strom und/oder die elektrische Spannung zum Betrieb des ersten (11) und/oder des zweiten Motors (12) vorgegeben werden und wobei insbesondere in Abhängigkeit verwendeter Blindnietelemente Schwellwerte in der Steuereinheit (21) abgespeichert werden.

12. Verfahren nach einem der Ansprüche 9 bis 11 **dadurch gekennzeichnet, dass** ein Betätigungselement (22) zur manuellen Betätigung durch einen Bediener vorgesehen ist, wobei das Betätigungselement (22) wegabhängig betätigt wird, sodass über den manuell steuerbaren Weg der Betätigung wenigstens der erste Motor (11) mit veränderbarer Drehzahl aktiviert wird.

## Claims

1. A riveting tool (1) for setting blind rivet elements, namely blind rivet nuts and/or blind rivet bolts, having a mandrel (10) in which a rotary motion can be initiated to screw said mandrel into the blind rivet element and which can be pulled into the riveting tool (1) by a pulling motion in order to at least in part plastically deform the blind rivet element, wherein a first motor (11) is provided to initiate the rotary motion in the mandrel (10) via a first operative connection with the mandrel (10) comprising a mandrel shaft (15) extending along a mandrel axis (13),
**characterized in that** a second motor (12) is provided to initiate the pulling motion in the mandrel (10) via a second operative connection with the mandrel (10) comprising a spindle nut (17) interacting with a hollow spindle (18), wherein the mandrel shaft (15) can be moved in a lifting motion along with the hollow spindle (18) .

2. The riveting tool (1) according to Claim 1,
**characterized in that** the mandrel (10) can be rotated about the mandrel axis (13) and/or that it can be moved axially along said axis, wherein the first motor (11) is arranged such that a motor axis (14) of the first motor (11) coincides with the mandrel axis (13).

3. The riveting tool (1) according to Claim 1 or 2,
**characterized in that** the first motor (11) comprises a gearing unit (16) at which the mandrel shaft (15) is arranged.

4. The riveting tool (1) according to any one of Claims 1 to 3, **characterized in that** the first motor (11) has a lower electrical power input and/or lower mechanical power output than the second motor (12).

5. The riveting tool (1) according to any one of the preceding claims, **characterized in that** the mandrel shaft (15) passes concentrically through the interior of the hollow spindle (18).

6. The riveting tool (1) according to any one of the preceding claims, **characterized in that** the mandrel shaft (15) is supported rotatably inside the hollow spindle (18).

7. The riveting tool (1) according to any one of the preceding claims, **characterized in that** the first motor (11) and in particular the gearing unit (16) can be moved along with the motion of the hollow spindle (18) or, correspondingly, the mandrel shaft (15).

8. The riveting tool (1) according to any one of the preceding claims, **characterized in that** at least one sensing means (19, 20) is provided with which at least the axial position of the hollow spindle (18) or, correspondingly, the mandrel shaft (15) can be detected and/or wherein a control unit (21) is provided which can activate the first motor (11) and/or the second motor (12), in particular in interaction with the sensor means (19, 20).

9. A method for operating a riveting tool (1) for setting blind rivet elements, namely blind rivet nuts and/or blind rivet bolts, having a mandrel (10) in which a rotary motion is initiated to screw said mandrel into the blind rivet element and in which a pulling motion is initiated to at least in part plastically deform the blind rivet element, wherein the method includes at least the following steps:
- activating a first motor (11) which initiates the rotary motion in the mandrel (10) via a first operative connection with the mandrel (10) comprising a mandrel shaft (15) extending along a mandrel axis (13) to screw the mandrel (10) into the blind rivet element,
- deactivating the first motor (11),
- activating a second motor (12) which initiates the pulling motion in the mandrel (10) via a second operative connection with the mandrel (10) comprising a spindle nut (17) interacting with a hollow spindle (18), wherein the mandrel shaft (15) can be moved in a lifting motion along with the hollow spindle (18) to cause the at least partial plastic deformation of the blind rivet element.

10. The method according to Claim 9, **characterized in that** the control unit (21) monitors the electric current and/or the electric voltage for operating the first motor (11) and/or the second motor (12), wherein the activation and/or the deactivation of the first motor (11) and/or the second motor (12) is controlled by the control unit (21) depending on the detected electric current and/or electric voltage.

11. The method according to Claim 10, **characterized in that** the threshold values of the electric current and/or the electric voltage for operating the first motor (11) and/or the second motor (12) are defined, wherein threshold values are stored in the control unit (21) in particular depending on the blind rivet elements being used.

12. The method according to any one of Claims 9 to 11,
**characterized in that** an actuating element (22) for the manual actuation by an operator is provided, wherein the actuating element (22) is actuated in a travel-dependent manner such that the manually selected degree of travel of the actuator activates at least the first motor (11) with a variable rotational speed.

## Revendications

1. Riveteuse (1) pour la pose d'éléments de rivetage borgnes, à savoir d'écrous borgnes à riveter et/ou de vis borgnes à riveter, comportant un mandrin de traction (10) dans lequel un mouvement rotatif peut être conduit pour un vissage dans l'élément de rivetage borgne et qui peut être introduit, pour une déformation plastique au moins partielle de l'élément de rivetage, par un mouvement de traction dans la riveteuse (1), étant prévu un premier moteur (11) grâce auquel, par une première interaction avec le mandrin de traction (10) comprenant un arbre de mandrin (15) s'étendant dans un axe de mandrin (13), le mouvement de rotation peut être conduit dans le mandrin de traction (10),
**caractérisée en ce qu'**il est prévu un second moteur (12) grâce auquel le mouvement de traction peut être conduit dans le mandrin de traction (10) par une seconde interaction avec le mandrin de traction (10) comprenant un écrou à broche (17) qui interagit avec une broche creuse (18), l'arbre de mandrin (15) pouvant être soulevé avec la broche creuse (18).

2. Riveteuse (1) selon la revendication 1, **caractérisée en ce que** le mandrin de traction (10) peut tourner autour de l'axe de mandrin (13) ou est mobile axialement dans celui-ci, le premier moteur (11) étant disposé de manière à ce qu'un axe de moteur (14) du premier moteur (11) coïncide avec l'axe de mandrin (13).

3. Riveteuse (1) selon la revendication 1 ou 2,
**caractérisée en ce que** le premier moteur (11) comprend une unité de transmission (16) au niveau de laquelle l'arbre de mandrin (15) est disposé.

4. Riveteuse (1) selon l'une quelconque des revendications 1 à 3, **caractérisée en ce que** le premier moteur (11) présente une puissance électrique absorbée et/ou une puissance mécanique de sortie inférieures à celle du second moteur (12).

5. Riveteuse (1) selon l'une quelconque des revendications précédentes, **caractérisée en ce que** l'arbre de mandrin (15) est guidé concentriquement par rapport à la broche creuse (18) à travers celle-ci.

6. Riveteuse (1) selon l'une quelconque des revendications précédentes, **caractérisée en ce que** l'arbre de mandrin (15) s'appuie en rotation dans la broche creuse (18).

7. Riveteuse (1) selon l'une quelconque des revendications précédentes, **caractérisée en ce que** le premier moteur (11) et en particulier l'unité de transmission (16) peuvent être entraînés par le mouvement de la broche creuse (18) ou de l'arbre de mandrin (15).

8. Riveteuse (1) selon l'une quelconque des revendications précédentes, **caractérisée en ce qu'**il est prévu au moins un moyen de détection (19, 20) grâce auquel au moins la position axiale de la broche creuse (18) de l'arbre de mandrin (15) peut être détectée, et/ou il est prévu une unité de commande (21) par laquelle le premier (11) et/ou le second moteur (12) est activable en particulier en interaction avec les moyens de détection (19, 20).

9. Procédé d'utilisation d'une riveteuse (1) pour la pose d'éléments de rivetage borgnes, à savoir d'écrous borgnes à riveter et/ou de vis borgnes à riveter, comportant un mandrin de traction (10) dans lequel un mouvement rotatif peut être conduit pour un vissage dans l'élément de rivetage borgne et dans lequel un mouvement de traction peut être conduit pour une déformation plastique au moins partielle de l'élément de rivetage borgne, le procédé présentant au moins les étapes suivantes :
- activation d'un premier moteur (11) grâce auquel, par une première interaction avec le mandrin de traction (10) comprenant un arbre de mandrin (15) s'étendant dans un axe de mandrin (13), le mouvement de rotation peut être conduit dans le mandrin de traction (10) pour visser le mandrin de traction (10) dans l'élément de rivetage borgne,
- désactivation du premier moteur (11),
- activation d'un second moteur (12) grâce auquel, par une seconde interaction avec le mandrin de traction (10) comprenant un écrou à broche (17) qui interagit avec une broche creuse (18), l'arbre de mandrin (15) pouvant être soulevé avec la broche creuse (18), le mouvement de traction est conduit dans le mandrin de traction (10) pour provoquer la déformation au moins partielle dans l'élément de rivetage borgne.

10. Procédé selon la revendication 9, **caractérisé en ce que** le courant électrique et/ou la tension électrique permettant de faire fonctionner le premier (11) et/ou le second moteur (12) est détecté par l'unité de commande (21), l'activation et/ou la désactivation du premier (11) et/ou du second moteur (12) étant contrôlées en fonction du courant électrique détecté et/ou de la tension électrique par l'unité de commande (21) .

11. Procédé selon la revendication 10, **caractérisé en ce que** des valeurs seuils pour le courant électrique et/ou la tension électrique permettant de faire fonctionner le premier (11) et/ou le second moteur (12) sont prédéfinies et dans lequel, en particulier en fonction des éléments de rivetage borgnes utilisés, des valeurs seuils sont sauvegardées dans l'unité de commande (21).

12. Procédé selon une des revendications 9 à 11, **caractérisé en ce qu'**il est prévu un élément d'actionnement (22) pour actionnement manuel par un utilisateur, l'élément d'actionnement (22) étant actionné en fonction de la course, de sorte que, par l'intermédiaire de la course contrôlable manuellement de l'actionnement, au moins le premier moteur (11) est activé avec un régime variable.
